# EUROPEAN PATENT SPECIFICATION

(11) **EP 0 876 415 B1**
(45) Date of publication and mention of the grant of the patent: **20.06.2001**
(21) Application number: 97901548.4
(22) Date of filing: 18.01.1997
(51) Int. Cl.: C08G 18/30, C08J 9/08, C09J 175/04

(54) **ADHESIVE**
KLEBSTOFF
ADHESIF

(30) Priority: 25.01.1996 GB 9601445
(43) Date of publication of application: 11.11.1998
(73) Proprietor: Vantico AG, 4057 Basel (CH)
(72) Inventor: BALL, Alan, Essex CB10 2AY (GB)
(86) International application number: EP9700225
(87) International publication number: WO9727234

(56) References cited:
- EP-A- 0 379 184
- EP-A- 0 392 171
- FR-A- 2 654 385
- US-A- 5 096 206

## Description

The present invention relates to a method of adhering substrates by applying a foaming polyurethane adhesive.

Polyurethane adhesives are used in various applications and when there is a fire, smoke is generated by the adhesive. There are an increasing number of regulations relating to smoke generation, for example in the case of building panels there is an increasing need to meet the fire/smoke requirements of, e.g. DIN 4102-A2 or other comparable national standards.

EP-A 379 184 discloses polyurethane prepolymers based on polyether polyols and polyisocyanates which can be foamed and cured by mixing with water and can be applied as adhesives for moist wood. Those polyurethanes are prepared from about 10 to about 60 parts polyisocyanate per 100 parts polyol.

According to FR-A 2 654 385, similar compositions can be used for the preparation of rigid insulating articles by applying a polyurethane adhesive to the two surfaces of a porous insulating material, applying an aqueous solution to the material coated with the adhesive and placing a support substrate on each surface followed by compressing the assembly.

We have now found that the amount of smoke generated by a polyurethane adhesive can be reduced by the use of higher than normal amounts of water.

Accordingly the present invention provides a method of adhering substrates by applying to at least one of the substrates a foaming polyurethane adhesive formed from a polyol, a polyisocyanate, the weight ratio of polyol: polyisocyanate being from 100 : 75 to 100 : 175, and at least 5% by weight of water based on the total weight of adhesive, bringing the substrates together, and allowing or inducing the adhesive to foam and cure, which comprises using the adhesive at an application rate of less than 150 g/m².

The adhesive is preferably a two component polyurethane, one component being a polyol and the other being a polyisocyanate.

Suitable polyols include polytetrahydrofurans, polycaprolactone diols, polyalkylene glycols such as polypropylene glycols and polyether polyols.

The diisocyanate and maybe any of those commonly used to make polyurethanes such as isophorone diisocyanate, hexamethylene diisocyanate, dicyclohexylmethane 4,4'-diisocyanate, toluene diisocyanate, diphenylmethane, 4,4'-diisocyanate, trimethyl hexamethylene diisocyanate, tetramethyl xylylene diisocyanate, phenyl diisocyanate, xylylene diisocyanate and naphthalene diisocyanate.

When making foamed polyurethane using water as a blowing agent the amount of water used is usually about 1-2%. According to the present invention we use at least 5% of water, preferably at least 10%, more preferably at least 20%, e.g. 35 to 40%. Amounts as high as 60% may be used.

For a given amount of adhesive, the more water that is used, the less smoke is produced on burning.

The use of higher amounts of water produces optimum foaming and allows the use of lower amounts of adhesive thereby reducing the amount of smoke further. When producing such articles as building panels comprising rockwool between two steel panels, the high foaming ensures that any gaps or spaces between the steel skins and the rockwool are filled. This is of benefit for the mechanical properties of the panels.

A standard ratio of polyol : isocyanate in a polyurethane adhesive is about 100:10 to 100:25. In the system according to the invention, more isocyanate is needed to additionally react with the water. Accordingly the ratio of polyol : isocyanate is 100:75 to 100:175

The adhesive system may be applied by various procedures. For example the polyol and isocyanate may be mixed and applied to the substrate with the separate application of water. This may be achieved using two sprays, one of the polyol/isocyanate and one of the water. As an alternative the water and polyol may be premixed and applied together with separate application of the isocyanate.

The amount of adhesive applied is below 150g/m², preferably about 120g/m² or below and most preferably about 100g/m² or below.

After application, the substrates are brought together and the adhesive allowed or induced to foam and cure. e.g. by heating if necessary.

The invention is illustrated by the following Examples.

### Example 1

Steel panels are coated with a two-part polyurethane adhesive. One part comprises a polyol which is a branched polyether from propylene oxide and a triol and has an OH content of about 1.06% and an OH equivalent of about 1600 and containing a halogenated phosphate ester as fire retardant and 1% of dibutyl tin dilaurate, and 0.8% of N,N,N ¹,N¹¹,N¹¹ - pentamethyl diethylene triamine as catalysts. The other part is based in 4,4¹ - diphenylmethane diisocyanate containing isomers and oligomers and having a functionality of about 2.7. The two parts are used in the ratio of 100:150 parts by weight.

The adhesive is applied to two steel panels preheated to 50 °C and Rockwool at a weight of per interface 90 g/m² and water is applied at the same time at an amount of 5-10% by weight of the adhesive or at 35-40% by weight of the adhesive.

The Rockwool is then adhered between the two panels.

After the adhesive is cured at 50 °C for 5 minutes samples are prepared with steel on one side only and being 30mm x 30mm x 15mm in size and these samples are tested according to DIN 4102-A2 in accordance with NMP 852-12/83. In order to pass this test the smoke density should be below 15%.

When using 5-10% water, the maximum mean value of the smoke density is 14.2%.

When using 35-40% water, the maximum mean value of the smoke density is 7.3%.

### Examples 2-4

Example 1 is repeated using three different weights of adhesive and different amounts of water. The results obtained when the samples are tested according to DIN 4102-A2 are as follows:

| Example | Adhesive Weight (g/m²) | Amount of Water (%) | Smoke Density (%) |
|---|---|---|---|
| 2 | 121 | 38 | 12.0 |
| 3 | 117 | 10 | 14.1 |
| 4 | 95 | 38 | 7.9 |

## Claims

1. A method of adhering substrates by applying to at least one of the substrates a foaming polyurethane adhesive formed from a polyol, a polyisocyanate, the weight ratio of polyol: polyisocyanate being from 100 : 75 to 100 : 175, and at least 5% by weight of water based on the total weight of adhesive, bringing the substrates together, and allowing or inducing the adhesive to foam and cure, which comprises using the adhesive at an application rate of less than 150 g/m².

2. A method as claimed in claim 1, which comprises using the adhesive at an application rate of less than 120 g/m² or below.

3. A method as claimed in claim 1, which comprises using the adhesive at an application rate of less than 100 g/m² or below.

## Patentansprüche

1. Verfahren zum Verbinden von Substraten, bei dem man einen schäumenden Polyurethan-Klebstoff, der aus einem Polyol und einem Polyisocyanat in einem Gewichtsverhältnis von Polyol:Polyisocyana: zwischen 100:75 und 100:175 und zumindest 5 Gew.-%, bezogen a if das Gesamtgewicht des Klebstoffes, Wasser gebildet ist, auf zumindest eines der Substrate aufbringt, die Substrate zusammenfügt und dem Klebstoff schäumen und aushärten lässt bzw. dazu veranlasst, **dadurch gekennzeichnet,** dass der Klebstoff in einer Menge von weniger als 150 g/m² aufgebracht wird.

2. Verfahren gemäß Anspruch 1, **dadurch gekennzeichnet,** dass der Klebstoff in einer Menge von weniger als 120 g/m² oder darunter aufgebracht wird.

3. Verfahren gemäß Anspruch 1, **dadurch gekennzeichnet,** dass der Klebstoff in einer Menge von weniger als 100 g/m² oder darunter aufgebracht wird.

## Revendications

1. Procédé consistant à faire adhérer des substrats en appliquant à au moins un des substrats un adhésif de polyuréthanne expansible formé à partir d'un polyol, d'un poly-isocyanate, le rapport pondéral polyol:poly-isocyanate étant de 100 :75 à 100 :175, et au moins 5% d'eau en poids basé sur le poids total de l'adhésif, à assembler les substrats, et à laisser se dérouler ou à induire l'expansion de l'adhésif et à le durcir, qui comprend l'utilisation de l'adhésif à un taux d'application inférieur à 150 g/m².

2. Procédé selon la revendication 1, qui consiste à utiliser l'adhésif à un taux d'application inférieur à 120 g/m² ou moins.

3. Procédé selon la revendication 1, qui consiste à utiliser l'adhésif à un taux d'application inférieur à 100 g/m² ou moins.
